# EUROPEAN PATENT APPLICATION

(11) **EP 1 324 573 A2**
(43) Date of publication of application: **02.07.2003**
(21) Application number: 02258787.7
(22) Date of filing: 19.12.2002
(51) Int. Cl.: H04M 1/247

(54) **Dynamic user menu**

(30) Priority: 21.12.2001 US 23700
(71) Applicant: Nokia Corporation, 02150 Espoo (FI)
(72) Inventor: Hatch, Richard, Malvern, Worcestershire WR14 2TQ (GB); Carvell, Andrew, Farnborough, Hampshire (GB)
(74) Representative: Seymour, James N.

(57) **Abstract**

An electronic device comprising a memory for storing a menu of items (31) and a controller (16) operable to order said items (31) in said menu according to their frequency of use. In a preferred embodiment, the electronic device is a mobile telephone (1).

## Description

The present invention relates to the field of electronic devices. In particular, the electronic device to which this invention relates is a mobile telecommunications device such as a telephone. However, it could also relate to any other electronic device that incorporates a memory for storing a list of items including, for example, a personal data assistant (PDA). For ease of understanding, the invention will be described hereinafter in its application to a mobile telephone.

The majority of conventional mobile telephones incorporate a phonebook in which the owner may store a list of names and their associated contact numbers. These lists are arranged alphabetically. To access and call a particular number, the user presses the scroll key to display the first few or last few names in the alphabetical list depending on whether the "down" or "up" scroll key is pressed first. They must then make multiple presses of the scroll key to move through the list until the name of the person they wish to contact is displayed and highlighted with the scroll bar. Activation of the call button will then dial the number associated with that person stored in the memory.

A disadvantage with the conventional mobile telephone is that repeated key presses are required to locate and highlight some contact details in the phonebook list, especially when the contact is stored under a name that begins with a letter towards the middle of the alphabet and the phonebook contains a large number of contacts. Therefore, the initiation of a call to a contact stored in the phonebook is sometimes time consuming and tiresome.

The aforementioned problems are alleviated by the provision of a "speed dial" feature. A frequently dialled contact number can be assigned to a particular key so that when that key is pressed and held in the pressed state for a few seconds, the contact number assigned to it is automatically dialled. Although this avoids multiple key presses, the speed dial keys must be frequently re-configured and updated by the user as his/her most dialled numbers change. Furthermore, mobile phone users are reluctant to use the speed dial option because it is difficult to remember which key has been assigned to which contact resulting in an increase in mis-dialled calls.

Mobile telephones are also provided with a facility whereby a list of the last few numbers dialled can also be accessed and called thereby avoiding the requirement to scroll through the alphabetical phonebook list. However, the user cannot be certain that the number they are seeking will still be on this list, as only the contact details for the previous few calls are retained. Additionally, they may have to scroll past those "one-off" numbers which have been dialled more recently but which have only ever been dialled the once or are very infrequently dialled to reach the required contact.

According to the present invention, there is provided an electronic device comprising a memory for storing a plurality of user selectable items and a controller operable to order said items according to the frequency of selection of each item.

The benefit of having a mobile telecommunications device according to the present invention is that the phonebook will automatically order the numbers according to how many times each one is called. Therefore, there is no manual configuration or setting-up required by the user, as there is with speed dials. As call frequency ordering favours numbers that are regularly used over ones that have only just been dialled, the user's favourite numbers will always be at the top of the list when the scroll key is pressed to display a list of entries in the phonebook. A user may still be able to access a list of the most recently dialled numbers by pressing a call handling key. However, a benefit of accessing a most frequently dialled call list as opposed to a most recently dialled call list is that those "one-off" numbers that have recently been dialled but which are unlikely to be dialled again will not be displayed on the most frequently dialled call list.

The electronic device of the present invention preferably comprises a mobile telecommunications device and the plurality of user selectable items comprises a list of contacts, the controller being operable to order said list of contacts according to the frequency of selection of each contact by the user.

The plurality of user selectable items may also, or alternatively be, a dictionary of words, the controller being operable to predict and select a word stored in the dictionary in response to text message entry, the controller also being configured to initially predict and select the word most frequently selected by the user when more than one word fits a prediction.

The majority of conventional mobile telecommunications devices include a dictionary of words and a form of predictive text software that predicts a particular word from the dictionary during text message (SMS) entry with the aim of reducing the total number of keypresses that must be made during word entry. For example, the word "Hello" can be entered by pressing the following keys in sequence: "4", "3","5", "5","6". The software recognises this sequence of keypresses and automatically enters the word thereby avoiding the requirement to scroll through the letters associated with each key. However, there are some sequences of key presses that correspond to two or more possible words in the dictionary, the software then predicts and enters one of the words that appears in the dictionary. The user must then press the "*" key repeatedly to cycle through the various different word options. For example, the words "beer" and "adds" both have the sequence "2","3","3","7". When this sequence is entered, the first word that appears is "adds". The alternative word "beer" may then be selected by pressing the "*" key. It will be appreciated that the additional presses of the "*" key result in slower text message entry.

As the telephone of the invention selects the word according to its frequency of use, the number of presses of the "*" key will be reduced. For example, users use the word "beer" more often than the word "adds" when sending text messages to friends. If the word "beer" is used more times than the word "adds", the controller will recognise this and predict the word "beer" first rather than the word "adds". If the word "adds" is required, the user may still select it by pressing the "*" key.

In one embodiment, the plurality of user selectable items comprises a list of SMS templates, the controller being operable to order the SMS templates according to the frequency of selection of each SMS template by the user.

The mobile telecommunications device may include a location based services database, the plurality of user selectable items comprising a list of landmarks being stored in the memory, the controller being operable to order the list of landmarks according to the frequency of selection of each landmark by the user.

The mobile telecommunications device is preferably WAP enabled, the plurality of user selectable items comprising a list of URL's, the controller being operable to order the list of URL's according to the frequency of selection of each URL by the user.

The plurality of user selectable items may comprise a database of images, the controller being operable to order said database according to the frequency of selection of each image by the user.

In another embodiment, the plurality of user selectable items comprises a list of games, the controller being operable to order the list of games according to the frequency of selection of each game by the user.

The present invention also provides a method of handling a plurality of user selectable items stored in a memory of an electronic device, the method including the step of selecting items in order according to the frequency of selection of each item.

In a preferred embodiment, the electronic device is a mobile telecommunications device and the plurality of user selectable items is a list of contacts, the method including the step of ordering said list of contacts according to the frequency of selection of each contact by the user.

In one embodiment, the plurality of user selectable items is a dictionary of words, the method including the steps of predicting and selecting a word stored in the dictionary responsive to text message entry and predicting and selecting the word most frequently selected by the user when more than one word fits a prediction.

According to the present invention there is also provided a computer including a memory and a controller, the memory storing a program executable by the controller to carry out the method of handling a plurality of user selectable items stored in the memory, the method including the step of selecting items from the plurality of user selectable items in order according to the frequency of selection of each item.

According to the present invention, there is also included a program which, when run on a computer, is operable to perform a method of predicting and selecting a word from a dictionary of words stored in a memory in response to entry of text by the user, the program also being operable, when more than one word fits a prediction, to predict and select a word which is entered more frequently by the user.

The present invention also provides a program, according to the invention, stored on a computer readable medium.

The present invention also provides a predictive text input means for text message entry on a mobile communications device, the predictive text input means presents, in response to a given text entry, one or more word predictions from a dictionary of words used by the predictive text input means, the predictive text input means comprising a counter that monitors the frequency of selections of words used from the dictionary and provides an output based on the monitored frequency of selection, which output is used to modify the order of the predicted words presented in respect of the given text entry.

An embodiment of the invention will now be described with reference to the accompanying figures, in which:
FIGURE 1 shows a mobile telephone according to a preferred embodiment of the present invention;
FIGURE 2 shows a schematic representation of the electronic components of the mobile telephone illustrated in Figure 1;
FIGURES 3a and 3b shows two schematic illustrations of the front of a prior art mobile telephone before and after access to the phonebook has been obtained;
FIGURE 4a and 4b shows two schematic illustrations of the front of a mobile telephone according to the present invention before and after access to the phonebook has been obtained;
FIGURE 5a and 5b shows two schematic illustrations of the front of a mobile telephone during the composition of a text message according to the invention.

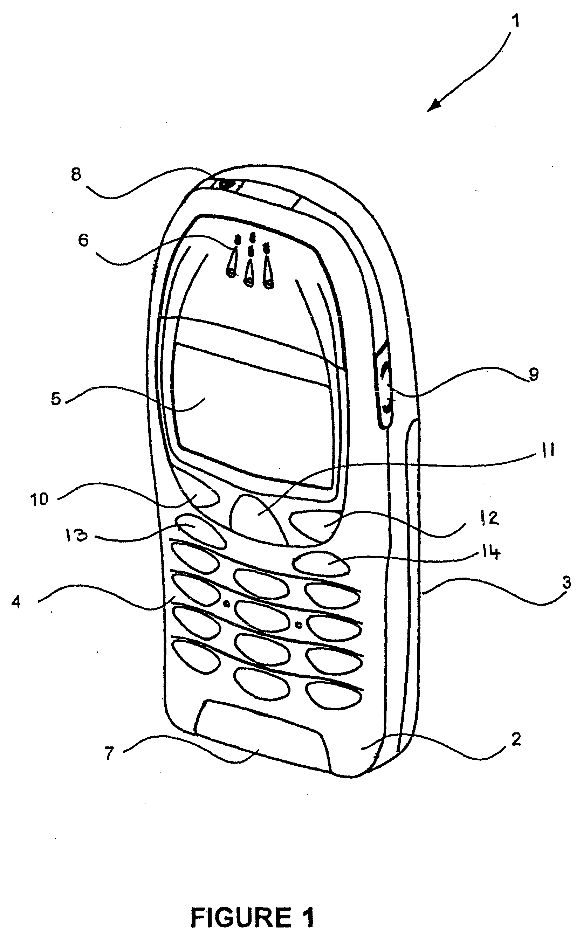

The preferred electronic device to which this invention is applicable is a mobile telephone such as that illustrated in Figure 1. The telephone 1 has a front casing portion 2 and a rear casing portion 3. A user interface is provided in the front casing portion 2 and comprises a key pad 4, an electronic display 5, an ear-piece 6, a microphone 7, an on/off key 8 and a scroll key 9 for highlighting a particular item in a menu to enable its selection or for controlling the volume of the sound emitted through the ear-piece 6. The telephone 1 is adapted to enable communication via a wireless telecommunications network, e.g. a cellular network. However, the telephone 1 could also be designed for a cordless network.

The keypad 4 has a first group of keys that are alphanumeric to enable a user to enter a telephone number, write a text message (SMS) or enter a name associated with a particular number, etc. The keypad 4 additionally includes five soft keys 10,11,12,13,14. The first soft key 10 is used to access the menu structure and to select a function in the menu. Its function changes depending on the status of the telephone 1. The second soft key 11 is used to scroll up and down in the display 5 whilst a menu is displayed. It is also used to access the first entry in the phonebook when the telephone 1 is in a starting position and is ready for use. The third soft key 12 is used to enter the phonebook options when the telephone 1 is in the starting position. However, when in the menu structure, the third soft key 12 is used to close the menu structure or erase entered characters. The fourth and fifth soft keys 13,14 are call handling keys. The first call handling key 13 is used to start a call or establish a conference call and the second call handling key 14 is used to end a conference call or reject an incoming call.

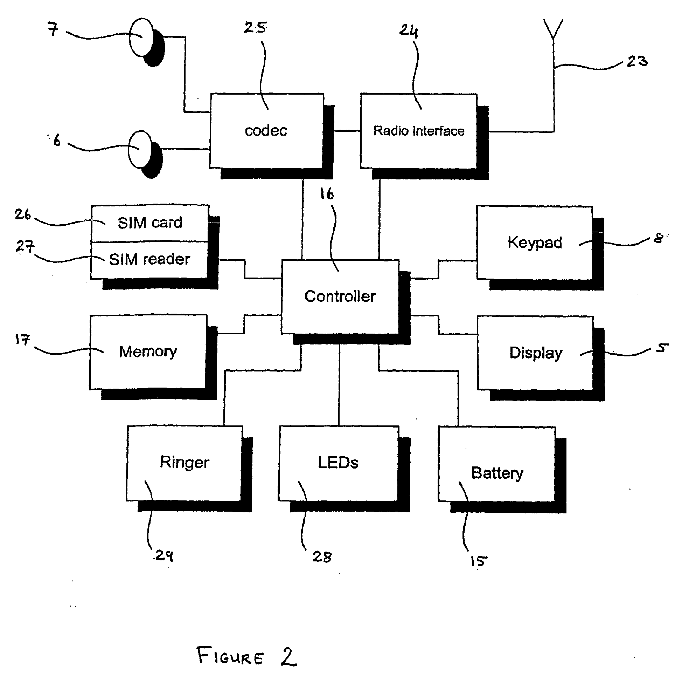

Figure 2 shows a schematic representation of the main components of the mobile telephone illustrated in Figure 1. The telephone is powered by a removable battery pack 15. Signal processing is carried out under the control of a digital microcontroller 16 that has an associated RAM/ROM and flash memory 17. Electric analogue signals are produced by microphone 7 and are fed to ear piece 6. The controller 16 receives instruction signals from the keypad 4 including the soft keys 10,11,12,13,14 and controls the operation of the display 5. Radio signals are transmitted and received by means of an antenna 23 connected through a radio interface 24 to a codec 25 configured to process signals under control of the controller 16. Thus, in use, for speech, the codec 25 receives analogue signals from the microphone 7, digitises them into a form suitable for transmission and feeds them to the radio interface 24 for transmission through antenna element 23 to the public land mobile network (PLMN). Similarly, received signals are fed to codec 25 so as to produce analogue signals which are fed to the ear piece 6. The telephone 1 also includes a subscriber identification module (SIM) card 26, a SIM card reader 27, light emitting diodes (LEDs) 28 and a ringer 29. The individual circuits and elements are of a type well known in the art, for example, in the Nokia range of mobile telephones.

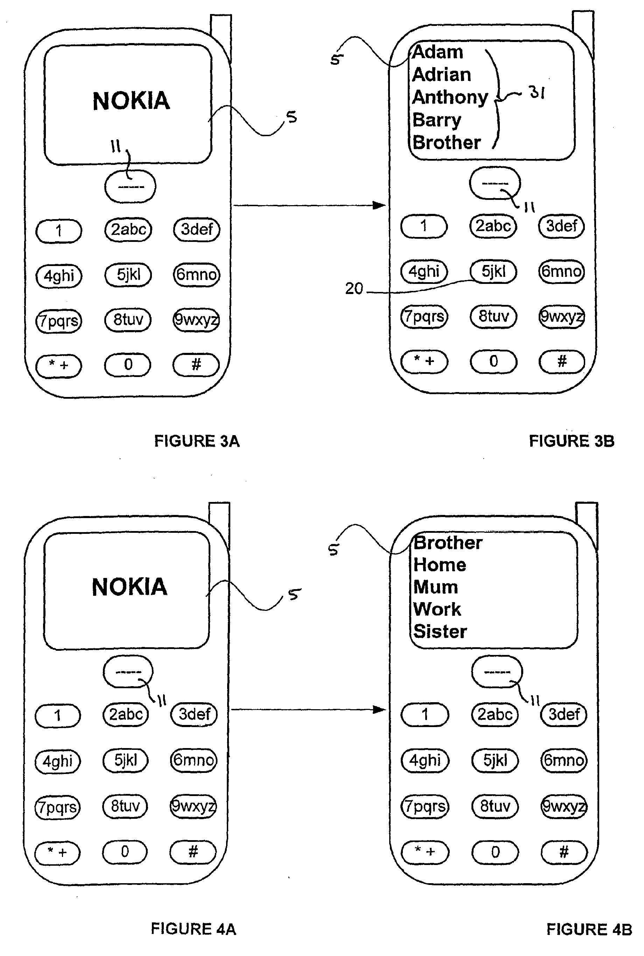

Referring now to Figure 3A, there is shown the front face of a conventional mobile telephone which is in a standby mode with the make of telephone or network provider displayed on the display 5 and, in Figure 3B, the same telephone following activation of the scroll key 11. When a user wishes to make a call to a contact stored in the phonebook with a conventional telephone, they press the scroll key 11 to display the list of entries 31. As can be seen in Figure 3B, the list 31 is displayed with the entries in alphabetical order with the first entry in the phonebook "highlighted". To access a particular entry, the user must press the scroll key 11 repeatedly until the required contact is listed and highlighted. A telephone number associated with the highlighted contact may then be dialled by pressing the soft key 13.

The front views of a mobile telephone according to the invention are illustrated in Figures 4A and 4B in which Figure 4A represents the telephone in a standby mode, as with Figure 3A, and Figure 4B represents the same telephone following activation of the scroll key 11. In accordance with the present invention, when the telephone is in the standby mode and the scroll key 11 is pressed, the phonebook list is displayed with those contacts that are called most often at the top of the list, rather than in alphabetical order.

The advantage obtained by providing a telephone according to an embodiment of the present invention can clearly be appreciated from the illustrated example in which the entry "Brother" is the most frequently dialled entry as it appears at the top of the list in Figure 4B. In the conventional telephone illustrated in Figure 3B, the user must activate the scroll button four times to highlight the entry "Brother" by scrolling through the names in the list which are alphabetically listed before "Brother" namely, "Adam", "Adrian", "Anthony", "Barry". However, with the telephone of the present invention, "Brother" appears at the top of the phonebook list, as shown in Figure 4B, because it is dialled the most frequently. Therefore, the user only has to press the scroll key 11 once to highlight the contact "Brother", the number associated with the contact "Brother" can then be dialled by pressing the soft key 13. Repeated scroll key 11 presses are thereby avoided.

It will be appreciated that the advantages obtained are even greater when the first letter of the name under which the frequently dialled entry is stored is one located much further through the alphabet and/or there is a large number of contacts stored in the phonebook, as even more scroll key presses are required in a conventional telephone to highlight that contact.

The invention can be implemented by allocating a "counter" byte to each of the entries in the phonebook. When a new entry is created, the counter is initialised to zero. Each time a number associated with a particular entry is called, the counter associated with that entry is incremented so that when the phonebook is browsed, the entry with the highest counter value is displayed first followed by the second highest and so-on.

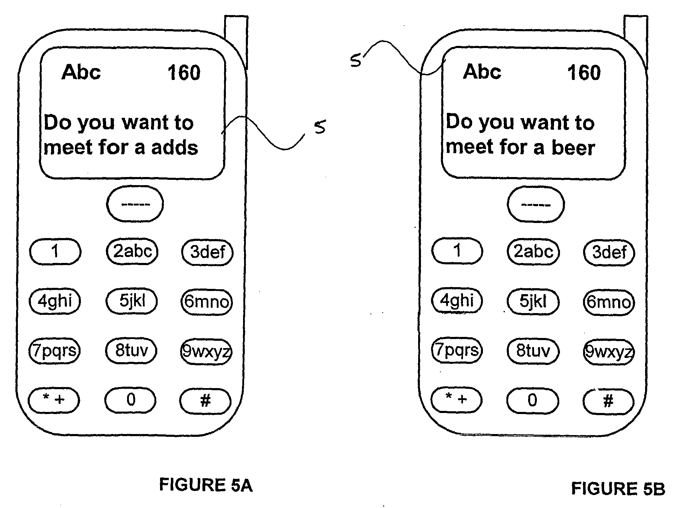

Another embodiment of the invention is illustrated in Figures 5A and 5B, which may be used in conjunction with the first embodiment or independently of it. Figure 5 illustrates the front view of a conventional mobile telephone during text message entry when the predictive text message software is activated, such as the "T9" dictionary currently used in the Nokia range of mobile telephones. The last word "adds" has been entered as a result of pressing the sequence "2","3","3","7". However, the user clearly wished to use the word "beer" rather than "adds", but the predictive text software defaults to the first word "adds". The user must therefore press the "*" key to change the word "adds" to the word "beer" as intended.

Figure 5B illustrates the front view of a mobile telephone according to an embodiment of the invention during entry of the same message. In this example, the user uses the word "beer" when text messaging more frequently than the word "adds". The controller 16 is programmed so that the more frequently selected word "beer" associated with the series of key presses "2","3","3","7" is stored in the memory 17. Of course, the most frequently selected word stored in the memory 17 may change if the frequency of selection of another word having the same series of key presses exceeds that of the presently stored word. For example, if the word "adds" is used more frequently than the word "beer", the most frequently used word "adds" will replace the word "beer" in the memory 17. The controller 16 accesses the most frequently stored word in the memory 17 at the time of text message entry and favours that word before the other words having the same series of key presses. Therefore, the user no longer has to press the "*" key to obtain the correct word.

Each word in the "T9" dictionary could be provided with an associated area of writeable non-volatile memory which is of a capacity sufficient to hold a priority value for each word. The amount of memory could be reduced by using 2 bits per value, so one byte would hold the values for 2 words. The value could, for example, be in the range 0....3 and be used to prioritise the ordering of words in the list of available choices. Each time a word is used, the dictionary would reference and update this value so that its priority value increases by one and, if required, the value of the other available choices decreased by one.

The present invention is also applicable to any other lists of information where an item from that list may be selected. For example, a database of information or images where part of that information or one particular image is selected and viewed more frequently than others. Lists of games, landmarks on a location based services database, WAP addresses or list of bookmarks for web sites. In all these lists, the device may default to the most frequently used item in that list or, when the list is displayed, order the items in the list in order of their frequency of use.

It will be appreciated that the device could be provided with a function whereby the list can be organised in a conventional alphabetical format in addition to the new most frequently accessed list, the device being switchable between the two options.

Many modifications and variations will be apparent to those skilled in the art. For example, whilst the invention has been described in relation to a mobile telephone, it can also be used in other electronic apparatus such as personal data assistants (PDAs) and laptop computers. Furthermore, whilst an embodiment of the invention makes reference to the WAP protocol, other IP protocols can be used such as TCPIP.

## Claims

1. An electronic device comprising a memory for storing a plurality of user selectable items and a controller operable to order said items according to the frequency of selection of each item.

2. An electronic device according to claim 1, comprising a mobile telecommunications device and wherein the plurality of user selectable items is a list of contacts, the controller being operable to order said list of contacts according to the frequency of selection of each contact by the user.

3. An electronic device according to claim 1, comprising a mobile telecommunications device and wherein the plurality of user selectable items is a dictionary of words, the controller being operable to predict and select a word stored in the dictionary in response to text message entry, the controller also being configured to initially predict and select the word most frequently selected by the user when more than one word fits a prediction.

4. An electronic device according to claim 1, comprising a mobile telecommunications device, the plurality of user selectable items comprising a list of SMS templates, the controller being operable to order the SMS templates according to the frequency of selection of each SMS template by the user.

5. An electronic device according to claim 1, comprising a mobile telecommunications device incorporating a location based services database, the plurality of user selectable items comprising a list of landmarks being stored in the memory, the controller being operable to order the list of landmarks according to the frequency of selection of each landmark by the user.

6. An electronic device according to claim 1, comprising a mobile telecommunications device and wherein the device is WAP enabled, the plurality of user selectable items comprising a list of URL's, the controller being operable to order the list of URL's according to the frequency of selection of each URL by the user.

7. An electronic device according to claim 1, wherein the plurality of user selectable items comprises a database of images, the controller being operable to order said database according to the frequency of selection of each image by the user.

8. An electronic device according to claim 1, wherein the plurality of user selectable items comprises a list of games, the controller being operable to order the list of games according to the frequency of selection of each game by the user.

9. A method of handling a plurality of user selectable items stored in a memory of an electronic device, the method including the step of ordering items according to the frequency of selection of each item.

10. A method according to claim 9, wherein the electronic device is a mobile telecommunications device and the plurality of user selectable items is a list of contacts, the method including the step of ordering said list of contacts according to the frequency of selection of each contact by the user.

11. A method according to claim 9, wherein the electronic device is a mobile telecommunications device and the plurality of user selectable items is a dictionary of words, the method including the steps of predicting and selecting a word stored in the dictionary responsive to text message entry and predicting and selecting the word most frequently selected by the user when more than one word fits a prediction.

12. A computer including a memory and a controller, the memory storing a program executable by the controller to carry out the method of handling a plurality of user selectable items stored in the memory, the method including the step of selecting items from the plurality of selectable items in order according to the frequency of selection of each item.

13. A program which, when run on a computer, is operable to perform a method of predicting and selecting a word from a dictionary of words stored in a memory in response to entry of text by the user, the program also being operable, when more than one word fits a prediction, to initially predict and select a word most frequently selected by the user.

14. A program according to claim 13, stored on a computer readable medium.

15. A predictive text input means for text message entry on a mobile communications device, the predictive text input means presents, in response to a given text entry, one or more word predictions from a dictionary of words used by the predictive text input means, the predictive text input means comprising a counter that monitors the frequency of selections of words used from the dictionary and provides an output based on the monitored frequency of selection, which output is used to modify the order of the predicted words presented in respect of the given text entry.
